# FASCICULE DE BREVET EUROPEEN

(11) **EP 1 728 716 B1**
(45) Date de publication et mention de la délivrance du brevet: **07.10.2009**
(21) Numéro de dépôt: 06010338.9
(22) Date de dépôt: 19.05.2006
(51) Int. Cl.: B64C 27/00

(54) **Générateur de vibrations par effet centrifuge à rotors contrarotatifs coaxiaux**
Schwingungserreger durch Zentrifugal-Effekt mit koaxialen gegenläufigen Rotoren
Vibration generator by centrifugal effect using coaxial counter rotating rotors

(30) Priorité: 25.05.2005 FR 0505223
(43) Date de publication de la demande: 06.12.2006
(73) Titulaire: EUROCOPTER, 13725 Marignane Cédex (FR)
(72) Inventeur: Clary, Sylvain, 64000 Pau (FR)
(74) Mandataire: Pouillot, Laurent Pierre Paul

(56) Documents cités:
- EP-A- 0 409 462
- WO-A-88/06687
- FR-A- 2 852 648
- US-A- 4 561 319
- DATABASE WPI Section PQ, Week 199024 Derwent Publications Ltd., London, GB; Class P43, AN 1990-183646 XP002362811 -& SU 1 526 844 A (TOMSKIJ POLT I IM.S.M.KIROVA) 7 décembre 1989 (1989-12-07)

## Description

La présente invention est relative à un générateur de vibrations par effet centrifuge qui comporte plusieurs rotors contrarotatifs et coaxiaux.

Le domaine technique de l'invention est celui de l'atténuation active des vibrations à bord des hélicoptères et autres aéronefs à voilure tournante. Il est connu d'équiper de tels aéronefs d'actionneurs destinés à supprimer ou atténuer les vibrations de l'aéronef qui résultent notamment d'efforts alternatifs appliqués au fuselage par le mécanisme de sustentation et de propulsion de l'aéronef.

A cet effet, on mesure les vibrations de l'aéronef à l'aide d'au moins un accéléromètre délivrant un signal de mesure de vibrations, on traite ce signal de mesure pat des moyens de traitement incluant un algorithme enregistré dans une carte électronique ou un calculateur embarqué(e), de façon à obtenir un signal de commande que l'on applique à l'actionneur pour générer des efforts s'opposant aux vibrations mesurées.

Ces efforts peuvent résulter du mouvement de battement d'une masse montée mobile en translation par rapport à la structure de l'aéronef ; la masse est généralement reliée à la structure de l'aéronef par un ressort, et est mue par un actionneur électromagnétique linéaire ; ce type d'actionneur antivibratile présente plusieurs inconvénients, à savoir :
i) un rendement faible qui entraîne une consommation importante d'énergie électrique, ainsi que la nécessité d'utiliscr un amplificateur du signal de commande présentant une puissance importante ;
ii) une masse élevée de l'amplificateur et de l'actionneur ; et
iii) une fonction de transfert qui n'est pas linéaire avec la fréquence du signal de commande, cette fonction de transfert présentant un pic pour la fréquence de résonance.

Il est également connu d'utiliser un actionneur rotatif comportant des rotors déséquilibrés (à balourds) pour produire des efforts par effet centrifuge.

Il a été décrit dans les brevets EP 409462 et US 5005439 un générateur de forces d'inertie pour annuler les vibrations indésirables d'un moteur ; ce générateur comporte un carter contenant deux paires de rotors déséquilibrés présentant un axe commun de rotation ; chaque rotor de chaque paire de rotor est respectivement entraîné en rotation (à l'intérieur du carter) par un moteur à vitesse variable ; chaque paire de rotor comporte un rotor externe et un rotor interne s'étendant (en partie) à l'intérieur du rotor externe ; les deux rotors d'une première paire de rotors sont mus dans un premier sens de rotation, et les deux rotors de la dcuxième paire de rotors sont mus dans un second sens de rotation qui est le sens inverse du premier sens de rotation ; les quatre rotors présentent un balourd (ou « excentricité de masse ») identique, qui est réalisé sous la forme d'une coque cylindrique ou d'un secteur de plaque ; la fréquence de la force d'inertie centrifuge de ce générateur est modifiée en faisant varier la vitesse (commune) des rotors ; l'amplitude de cette force d'inertie pour chaque paire de rotor est modifiée en faisant varier le décalage angulaire entre les balourds des rotors de la paire de rotors considérée ; la direction de la force d'inertie centrifuge du générateur est contrôlée en commandant la différence de phase entre les deux paires de rotors.

Le réglage de ces paramètres de fonctionnement nécessite de mesurer et d'ajuster en permanence la position angulaire relative de chacun des rotors.

Les balourds des quatre rotors sont soit centrés dans un plan orthogonal à l'axe commun de rotation, dans le cas de rotors en forme de coques « imbriquées », soit disposés de part et d'autre et à faible distance de ce plan, dans le cas de secteurs et/ou plaques juxtaposées.

Un tel générateur est également lourd et encombrant.

Un objectif de l'invention est de proposcr un générateur d'efforts commandables en amplitude, en fréquence et de préférence en direction, qui soit amélioré et/ou qui remédie, en partie au moins, aux inconvénients des générateurs (ou « suppresseurs ») de vibrations pour aéronefs.

Selon l'invention, il est proposé un dispositif pour générer des efforts variables et commandables en amplitude, le cas échéant en direction, et en fréquence, qui comporte deux rotors montés coaxiaux et contrarotatifs dans un carter, chaque rotor comportant un balourd (pour générer lesdits efforts par effet centrifuge) ; le dispositif comporte en outre des moyens électromagnétiques d'entraînement pour l'entraînement en rotation d'un premier des deux rotors par le second des deux rotors, ainsi que des moyens de freinage pour freiner le second rotor par rapport au carter.

En d'autres termes et selon un autre aspect de l'invention, il est proposé un dispositif antivibratile comportant deux rotors déséquilibrés coaxiaux montés dans un carter, un premier des deux rotors comportant un premier circuit (électro-)magnétique et un second des deux rotors comportant un second circuit électromagnétique prévu et agencé pour coopérer avec le premier circuit (électro-)magnétique, et entraîner le premier rotor en rotation, selon l'axe commun des rotors, par rapport au second rotor, lorsque le second circuit électromagnétique est alimenté ; le dispositif comporte en outre des seconds moyens de freinage pour freiner la rotation du second rotor par rapport au carter, ainsi que des moyens de commande de freinage pour contrôler la vitesse et la phase de rotation du second rotor (par rapport au carter) ; le dispositif comporte également des moyens de commande d'entraînement pour contrôler la vitesse et la phase de rotation du premier rotor par rapport au second rotor et/ou par rapport au carter.

Le fonctionnement du dispositif selon l'invention est le suivant : lorsque le circuit électromagnétique solidaire du second rotor est alimenté, ce circuit provoque la formation d'un champ magnétique tournant ; le circuit (électro)mágnétique solidaire du premier rotor, qui est placé dans ce champ tournant, est entraîné - avec ce premier rotor - en rotation par ce champ, par rapport au second rotor ; ainsi, les deux rotors et leurs circuits magnétiques associés forment un moteur électrique dont le « stator » est lui-même monté rotatif - selon l'axe du moteur - dans le carter du dispositif.

En réaction au couple d'entraînement exercé pat le second rotor sur le premier rotor, le second rotor est soumis à un couple opposé qui provoque sa rotation par rapport au carter, dans un sens inverse au sens de rotation du premier rotor ; à partir de la mesure de l'angle (la phase) et de la vitesse de rotation de chacun de ces rotors, on commande d'une part les moyens d'entraînemcnt du premier rotor par le second rotor, et d'autre part les moyens de freinage du second rotor par des moyens solidaires du carter, afin de maintenir la vitesse de « glissement » du second rotor (par rapport au carter) égale, en valeur absolue, à la vitesse de « glissement » (d'entraînement) du premier rotor par rapport au carter.

L'invention permet d'utiliser un seul moteur pour l'entraînement des deux rotors, ce qui permet de diminuer la masse et/ou l'encombrement des composants mécaniques et électromécaniques du dispositif.

Selon un mode préféré de réalisation de l'invention, le dispositif antivibratile incorpore deux tels sous-ensembles sensiblement identiques, qui sont alignés selon un axe de rotation commun, et le dispositif comporte des moyens de mesure et de contrôle du déphasage entre les deux couples de rotors contrarotatifs, afin d'adapter l'amplitude des forces centrifuges générées par le dispositif.

Selon un autre mode de réalisation de l'invention, le dispositif antivibratile incorpore deux tels sous-ensembles sensiblement identiques, les deux couples de rotors étant alignés selon deux axes de rotation distincts parallèles entre eux, et le dispositif comporte des moyens de mesure et de contrôle du déphasage entre les deux couples de rotors contrarotatifs.

Selon une autre caractéristique préférée, le circuit magnétique (inducteur) du second rotor est alimenté en courant continu par l'intermédiaire d'un collecteur tournant ; dans ce cas, le premier rotor peut comporter un circuit magnétique à aimants permanents, ou bien un circuit électromagnétique raccordé à une source d'énergie par un collecteur tournant.

D'autres caractéristiques et avantages de l'invention apparaissent dans la description suivante, qui se réfère aux figures annexées et qui illustre, sans aucun caractère limitatif, des modes préférés de réalisation de l'invention.

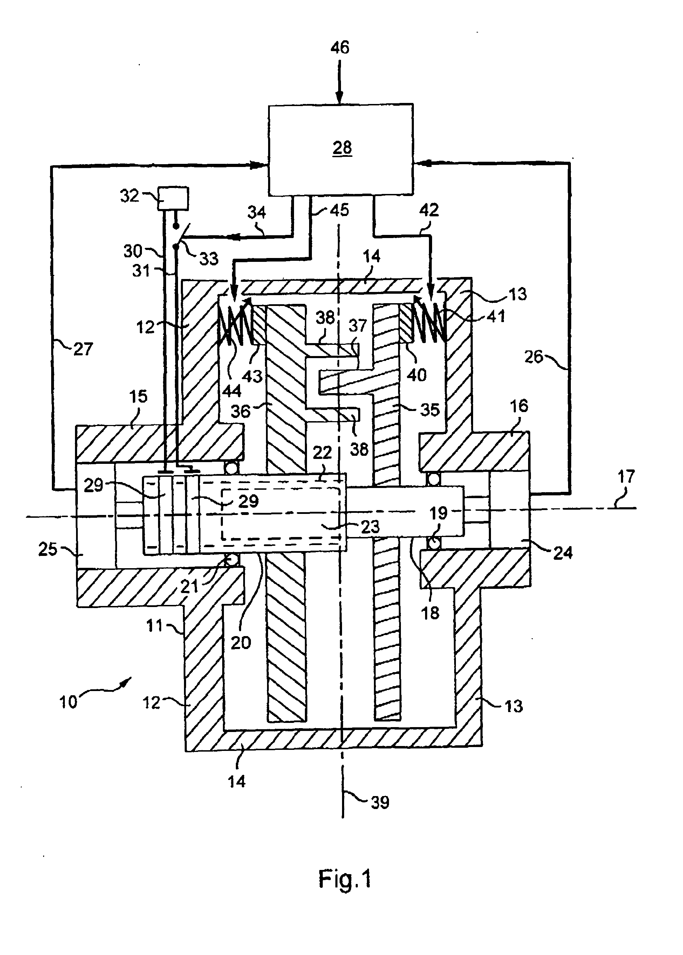

La figure 1 illustre, en vue en coupe schématique par un plan contenant l'axe commun de rotation des deux rotors déséquilibrés, un dispositif ou vibreur selon un premier mode de réalisation de l'invention, dont la fréquence et la direction de l'effort généré sont réglables indépendamment, l'amplitude de l'effort dépendant de la fréquence de rotation.

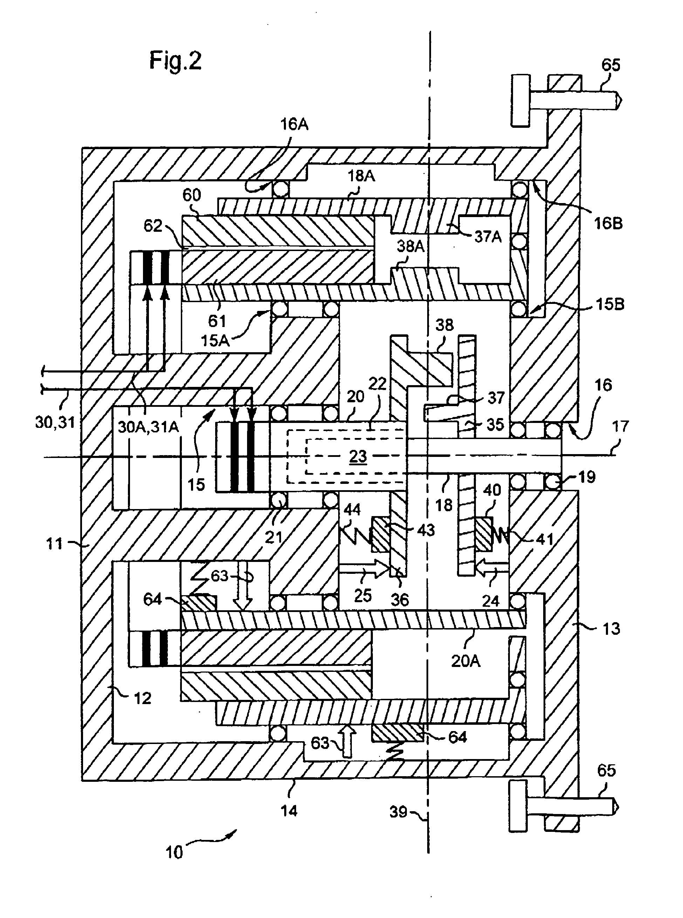

La figure 2 illustre, en vue en coupe schématique par un plan contenant l'axe commun de rotation des quatre rotors déséquilibrés, un dispositif ou vibreur selon un second mode de réalisation de l'invention, dont la fréquence, l'amplitude, et la direction de l'effort généré sont réglables indépendamment les unes des autres.

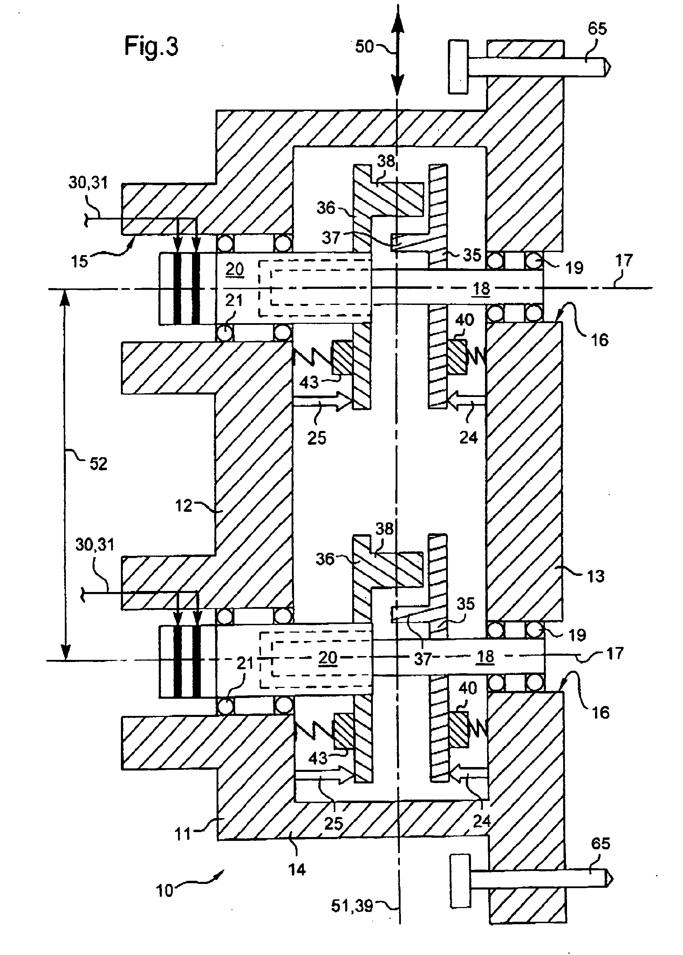

La figure 3 illustre, en vue en coupe schématique par un plan contenant les deux axes de rotation respectifs de deux couples de rotors déséquilibrés, un dispositif ou vibreur selon un troisième mode de réalisation de l'invention, dont la fréquence et l'amplitude de l'effort généré sont réglables indépendamment, la direction de l'effort dépendant de la position relative des deux axes de rotation.

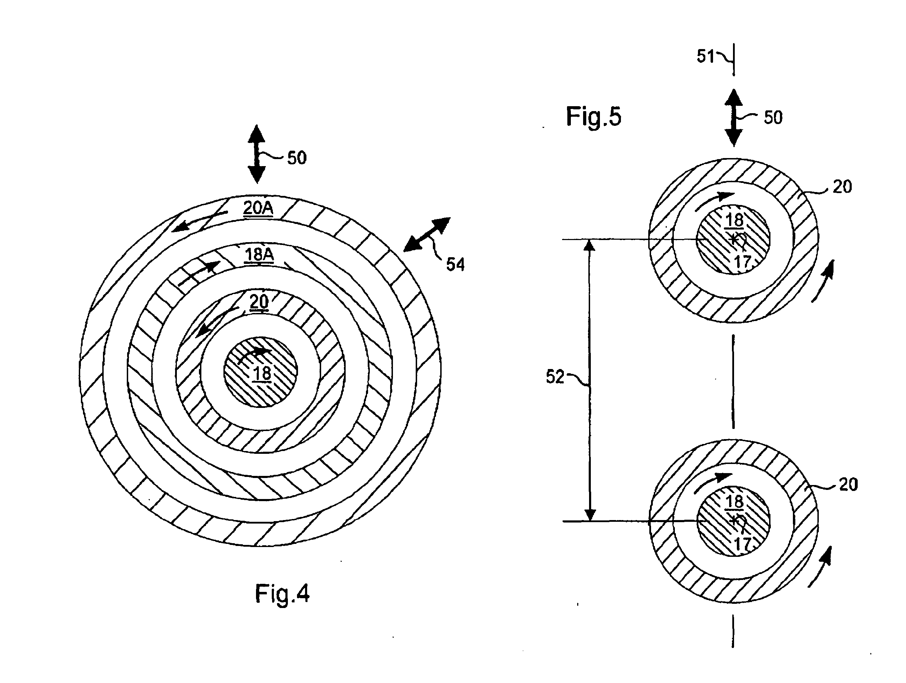

La figure 4 illustre, en vue en coupe schématique par un plan perpendiculaire aux axes de rotation des rotors déséquilibrés, la position relative et les sens de rotation des rotors d'un dispositif ou vibreur selon le second mode de réalisation de l'invention ; sauf indication contraire, les repères comportant une lettre finale (« a » ou « b ») désignent des éléments ou organes de structure ou fonction identique ou similaire à celle des éléments ou organes désignés par le même repère dénué de lettre finale.

La figure 5 illustre, en vue en coupe schématique par un plan perpendiculaire aux axes de rotation des rotors déséquilibrés, la position relative et les sens de rotation des rotors d'un dispositif ou vibreur selon le troisième mode de réalisation de l'invention.

Par référence aux figures 1 à 3, le dispositif 10 comporte un carter 11 comportant deux flasques 12 et 13 en regard mutuel qui sont réunis par une enveloppe 14.

Chaque flasque 12, 13 comporte un palier respectif 15, 16 ; ces deux paliers s'étendent selon un axe 17.

Un premier rotor 18 est monté rotatif dans le carter, selon l'axe 17, par rapport au palier 16, par l'intermédiaire de roulements 19 ou autres moyens équivalents.

Un second rotor 20 est monté rotatif dans le carter 11, selon l'axe 17, par rapport au palier 15, par l'intermédiaire de roulements 21 ou équivalents.

Le second rotor 20 présente une cavité 22 longitudinale à l'intérieur de laquelle s'étend une portion 23 du rotor 18.

Le second rotor 20 comporte un circuit électromagnétique susceptible de produire dans la cavité 22 un champ électromagnétique tournant selon l'axe 17.

Le premier rotor 18 comporte un circuit magnétique s'étendant en partie au moins dans sa portion 23, qui est susceptible d'être entraîné en rotation selon l'axe 17 par le champ tournant produit dans la cavité 22.

Le dispositif comporte un premier capteur 24 pour mesurer la position angulaire et/ou la vitesse de rotation du premier rotor 18, ainsi qu'un second capteur 25 pour mesurer la position angulaire et/ou la vitesse de rotation du second rotor 20.

Par référence à la figure 1 en particulier, ces deux capteurs sont respectivement reliés par une liaison 26, 27 à une unité 28 électronique de traitement de signaux et de données, à laquelle ils délivrent chacun un signal ou donnée représentatif de la position angulaire ou vitesse instantanée du rotor (18 respectivement 20).

Par référence aux figures 1 à 3, le rotor 20 comporte un collecteur tournant 29, et le dispositif comporte des conducteurs 30, 31 pour alimenter le collecteur tournant à partir d'une source 32 d'énergie électrique ; ceci permet d'alimenter le circuit électromagnétique du second rotor 20.

Cette alimentation est commandée par l'unité 28 agissant pour ce faire sur un organe 33 de commande d'alimentation, par l'intermédiaire d'un conducteur 34 acheminant des signaux de commande d'alimentation du circuit électromagnétique du rotor 20 (cf. figure 1).

Chacun des deux rotors 18, 20 comporte un « volant d'inertie » respectif 35, 36 pouvant prendre la forme d'un disque d'axe 17 ; chacun de ces deux disques comporte un balourd respectif 37, 38.

Ces deux disques et leurs masses excentriques 37, 38 respectives s'étendent au voisinage immédiat d'un plan orthogonal à l'axe 17 et dont la trace dans le plan de la figure unique est repérée 39 ; ce plan est celui dans lequel s'exercent les efforts générés par le dispositif.

Un premier frein permet de ralentir la rotation du premier rotor 18 dans le carter ; ce frein comporte un patin 40 susceptible de frotter contre la périphérie du disque 35 lorsqu'il est déplacé par un actionneur 41 commandé par des signaux de commande de freinage élaborés par l'unité 28 et transmis à l'actionneur par un conducteur 42 (cf. figure 1).

De la même façon, un second frein permet de ralentir la rotation du second rotor 20 ; ce frein comporte un patin 43 susceptible de frotter contre la périphérie du disque 36 solidaire du rotor 20, lorsqu'il est mû par un actionneur 44 commandé par des signaux transportés par un conducteur 45.

En fonctionnement, l'unité électronique 28 reçoit une consigne 46 d'effort à générer selon une fréquence, une amplitude ct une direction déterminée ; en fonction des signaux/données reçus des capteurs 24, 25, l'unité 28 élabore des signaux de commande qu'elle délivre respectivement par les conducteurs 34, 45 et 42 ; ces signaux permettent d'ajuster en permanence le champ magnétique d'entraînement du rotor 18 par le rotor 20, ainsi que le freinage de chacun de ces deux rotors (cf. figure 1).

En particulier, la valeur absolue de la vitesse de rotation de chacun des deux (ou quatre) rotors est maintenue égale, grâce à l'asservissement des deux (ou quatre) freins.

En pratique, le moment statique - d'ordre 1 - des rotors est voisin ou identique.

Par référence aux figures 2 et 3, le dispositif selon l'invention intègre deux ensembles tels que celui illustré figure 1, soit quatre rotors comportant chacun une masselotte, les inerties (ou moments statiques) des rotors étant identiques et les masselottes s'étendant sensiblement dans le plan (de trace 39) contenant la direction des efforts à générer.

Dans le troisième mode de réalisation correspondant aux figures 3 et 5, la direction 50 de l'effott alternatif généré par le dispositif est fixe : elle est colinéaire à l'axe 51 du plan de trace 39 qui est perpendiculaire aux axes 17 de rotation, cet axe 51 coupant les deux axes 17 de rotation.

Dans ce mode de réalisation, le dispositif comporte deux ensembles identiques à celui de la figure 1, dont les axes 17 de rotation sont parallèles et séparés d'une distance 52 ; les deux couples de rotors déséquilibrés contrarotatifs et coaxiaux deux à deux sont montés dans un carter 11 à 14 commun.

Dans les deux premiers modes de réalisation (figures 1, 2 et 4), la direction de l'effort global généré par les rotors déséquilibrés est contrôlée par le mouvement contrarotatif de chaque couple de masselottes. Cela correspond à un contrôle de vitesse de glissement entre le rotor 18 et le « stator » tournant 20 de chaque couple de rotors du système d'entraînement, pour assurer le mouvement contrarotatif des masselottes 37, 38. Ce contrôle peut être effectué par un système de freinage différentiel du « stator » 20 et du rotor 18 de chaque couple de rotors.

Cet asservissement porte également sur la phase entre les deux massclottcs d'un même couple de rotors 18, 20, afin de maintenir entre les masselottes un mouvement contrarotatif. La direction (repère 50 ou 54, figure 4) de l'effort généré étant définie par les deux points de croisement des masselottes (croisement « haut » et croisement « bas »), elle est donc contrôlée par le déphasage des masselottes.

Les balourds doivent être les plus proches possible dudit plan de trace 39, éventuellement concentriques, afin de limiter voire d'annuler le couple parasite créé sur le système d'entraînement.

Dans le second mode de réalisation des figures 2 et 4, le dispositif comporte un second couple de rotors contrarotatifs selon l'axe 17 de rotation du premier couple de rotors : un troisième rotor « mené » 18a et un quatrième rotor « menant » 20a sont montés dans le carter par l'intermédiaire de paliers 16a, 16b et 15a, 15b respectivement.

Les rotors 18a, 20a ont une forme de cylindre ou tambour d'axe 17 ; le rotor 18a comporte un circuit magnétique 60, tandis que le rotor 20a porte un circuit électromagnétique 61 faisant face au circuit 60 et séparé de cclui-ci par un entrefer 62; le circuit 61 est connecté à une source d'énergie (non représentée) par un collecteur et des conducteurs 30a, 31a.

Ces rotors sont respectivement équipés d'une masse de déséquilibrage respective 37a, 38a ; un capteur 63 de rotation et un frein 64 sont associés à chacun de ces rotors 18a, 20a et sont utilisés comme décrit ci-avant pour maîtriser à chaque instant la vitesse et la phase de chacun des rotors.

Par référence aux figures 2 et 4, des vis 65 sont prévues pour fixer l'appareil 10 à un support (non représenté) à faire vibrer.

Dans un dispositif comportant deux couples coaxiaux comme illustré figures 2 et 4,la maîtrise de l'amplitude de l'effort global généré est obtenue par le contrôle de la phase entre les deux couples de masselottes contrarotatives respectivement solidaire des deux couples de rotors. Ce contrôle de phase se fait en modifiant la fréquence de rotation d'un « moteur » (c'est-à-dire un couple de rotors 18, 20) jusqu'à l'obtention de la phase voulue ; ensuite les fréquences de rotation sont rendues identiques (au signe près) pour les quatre rotors.

Cet asservissement porte donc sur la phase entre les masselottes des deux couples de rotors.

La fréquence de l'effort généré est directement contrôlée par le régimc de rotation des deux « moteurs ».

La forme des masselottes doit être telle que les inerties polaires des ensembles (masselottes+stator) et (masselotte+rotor) soient les plus proches possibles.

Le dispositif de freinage est utilisé pour réguler le mouvement de chaque rotor en compensant notamment :
- la différence de frottement entre les deux paliers (tel que repérés 19 et 21),
- la différence résiduelle d'inertie polaire des ensembles tournants.

Le freinage n'est donc utilisé que pour des petites corrections de couple.

Concernant le dispositif de freinage, plusieurs solutions sont envisageables, notamment :
- un freinage par frottement mécanique (type frein à disque) : dans ce cas, le frein peut être monté soit en regard d'une partie périphérique de rotor portant une masselotte, pour une efficacité maximale, soit en regard d'une partie plus centrale du rotor et du « stator » afin de limiter le diamètre externe et donc l'encombrement global du système ; et/ou,
- un freinage électromagnétique : dans ce cas, le freinage est obtenu par création d'énergie électrique qui peut être stockée (dans une capacité par exemple), et/ou par courants de Foucault.

## Revendications

1. Dispositif (10) pour générer des efforts variables et commandables en fréquence et en amplitude, et le cas échéant en direction, qui comporte deux rotors (18, 20, 35 à 28) déséquilibrés montés coaxiaux dans un carter (11),
**caractérisé en ce qu'**il comporte en outre des moyens électromagnétiques d'entraînement pour l'entraînement en rotation d'un premier des deux rotors par le second des deux rotors de sorte que les rotors sont contrarotatifs, ainsi que des moyens (43 à 45) de freinage pour freiner le second rotor (20, 36, 38) par rapport au carter, et des moyens de contrôle de vitesse des rotors pour maintenir leurs valeurs absolues sensiblement identiques.

2. Dispositif selon la revendication 1, dans lequel un premier des deux rotors comporte un premier circuit magnétique ou électromagnétique et un second des deux rotors comporte un second circuit électromagnétique prévu et agencé pour coopérer avec le premier circuit magnétique ou électromagnétique, et pour entraîner le premier rotor en rotation, selon l'axe (17) commun des rotors, par rapport au second rotor, lorsque le second circuit électromagnétique est alimenté.

3. Dispositif selon la revendication 1 ou 2, qui comporte en outre des moyens (28) de commande des moyens de freinage pour contrôler la vitesse de rotation et la phase du second rotor par rapport au carter.

4. Dispositif selon l'une des revendications 1 à 3, qui comporte également des moyens (33, 34) de commande d'entraînement pour contrôler la vitesse de rotation et la phase du premier rotor (18, 35, 37) par rapport au second rotor ou par rapport au carter.

5. Dispositif selon l'une quelconque des revendications 1 à 4, qui comporte en outre des moyens (40 à 42) de freinage conçus et agencés pour freiner le premier rotor (18, 35, 37).

6. Dispositif selon l'une quelconque des revendications 1 à 5, qui comporte deux paires de rotors contrarotatifs et coaxiaux, chaque paire de rotor comportant ledit premier rotor et ledit second rotor formant un stator glissant pour le premier rotor.

7. Dispositif selon la revendication 6 qui comporte un axe (17) de rotation commun aux deux paires de rotors.

8. Dispositif selon la revendication 6 qui comporte un axe (17) de rotation distinct pour chaque paire de rotors.

9. Dispositif selon l'une quelconque des revendications 1 à 8, dans lequel les balourds ou masselottes (37, 38) équipant les rotors sont de même moment statique d'ordre 1 par rapport à l'axe commun de rotation, et sont situées dans un - ou au voisinage d'un - plan (39) commun qui est orthogonal à un ou deux axe(s) (17) commun(s) de rotation des rotors.

10. Dispositif selon l'une quelconque des revendications 1 à 9, dans lequel les moyens de freinage opèrent par frottement mécanique.

11. Dispositif selon l'une quelconque des revendications 1 à 10, dans lequel les moyens de freinage opèrent par effet électromagnétique, notamment par courants de Foucault.

12. Dispositif selon l'une quelconque des revendications 1 à 11, dans lequel le second rotor comporte une cavité (22) et un circuit électromagnétique pour créer un champ magnétique dans cette cavité, et dans lequel le premier rotor comporte une portion (23) engagée à faible jeu dans la cavité (22) du second rotor.

## Claims

1. Device (10) for generating forces that are variable and controllable in frequency and in amplitude, and possibly in direction, the device comprising two unbalanced rotors (18, 20, 35 to 38) mounted coaxially in a casing (11),
**characterised in that** it further comprises electromagnetic drive means for driving a first of the two rotors in rotation from the second of the two rotors such that the rotors rotate in opposite directions, together with brake means (43 to 45) for braking the second rotor (20, 36, 38) relative to the casing, and means for controlling the speed of the rotors in order to maintain their absolute values substantially identical.

2. Device according to Claim 1, in which a first of the two rotors has a magnetic or an electromagnetic first circuit and a second of the two rotors has an electromagnetic second circuit provided and arranged to co-operate with the magnetic or electromagnetic first circuit, and to drive the first rotor in rotation about the common axis (17) of the rotors relative to the second rotor when the electromagnetic second circuit is powered.

3. Device according to Claim 1 or 2, further comprising control means (28) for controlling the brake means in order to control the speed of rotation and the phase of the second rotor relative to the casing.

4. Device according to one of Claims 1 to 3, also comprising drive control means (33, 34) for controlling the speed of rotation and the phase of the first rotor (18, 35, 37) relative to the second rotor or relative to the casing.

5. Device according to any one of Claims 1 to 4, further comprising brake means (40 to 42) designed and arranged to brake the first rotor (18, 35, 37).

6. Device according to any one of Claims 1 to 5, having two pairs of contrarotating and coaxial rotors, each pair of rotors comprising said first rotor and said second rotor constituting a moving stator for the first rotor.

7. Device according to Claim 6, having an axis of rotation (17) common to both pairs of rotors.

8. Device according to Claim 6, having distinct axes of rotation (17) for each of the pairs of rotors.

9. Device according to any one of Claims 1 to 8, in which the unbalance weights or flyweights (37, 38) fitted to the rotors have the same first-order static moment relative to the common axis of rotation and are situated in or close to a common plane (39) that is orthogonal to one or both of the common axes of rotation (17) of the rotors.

10. Device according to any one of Claims 1 to 9, in which the brake means operate by mechanical friction.

11. Device according to any one of Claims 1 to 10, in which the brake means operate by an electromagnetic effect, in particular by eddy currents.

12. Device according to any one of Claims 1 to 11, in which the second rotor includes a cavity (22) and an electromagnetic circuit for creating a magnetic field in the cavity, and in which the first rotor includes a portion (23) engaged with small clearance in the cavity (22) of the second rotor.

## Patentansprüche

1. Schwingungserreger (10) zur Erzeugung in Frequenz und Amplitude, gegebenenfalls auch in der Richtung variabler und steuerbarer Kräfte mit zwei koaxial in einem Gehäuse (11) angebrachten desequilibrierten Rotoren (18, 20, 25-28), **dadurch gekennzeichnet, dass** der Schwingungserreger ferner elektromagnetische Antriebsmittel aufweist, zum Antreiben eines ersten der beiden Rotoren durch den zweiten der beiden Rotoren, in einer Drehbewegung, derart, dass die Rotoren sich gegenläufig drehen, sowie Bremsmittel (43-45) zum Bremsen des zweiten Rotors (20, 36, 38) relativ zum Gehäuse und Mittel zum Steuern der Geschwindigkeit der Rotoren, um deren Absolutwerte im Wesentlichen gleichzuhalten.

2. Schwingungserreger nach Anspruch 1, bei dem ein erster der beiden Rotoren einen ersten magnetischen oder elektromagnetischen Kreis aufweist und ein zweiter der beiden Rotoren einen zweiten elektromagnetischen Kreis aufweist, der vorgesehen und eingerichtet ist, um mit dem ersten magnetischen oder elektromagnetischen Kreis zusammenzuwirken, und um den ersten Rotor in eine Drehbewegung um die gemeinsame die gemeinsame Achse (17) der Rotoren relativ zum zweiten Rotor zu versetzen, während der zweite elektromagnetische Kreis gespeist ist.

3. Schwingungserreger nach Anspruch 1 oder 2, ferner aufweisend Mittel (28) zum Steuern der Bremsmittel, um die Drehgeschwindigkeit und die Phase des zweiten Rotors relativ zum Gehäuse zu steuern.

4. Schwingungserreger nach einem der Ansprüche 1 bis 3, ferner aufweisend Mittel (33, 34) zum Steuern des Antriebs, um die Drehgeschwindigkeit und die Phase des ersten Rotors (18, 35, 37) bezüglich des zweiten Rotors oder bezüglich des Gehäuses zu steuern.

5. Schwingungserreger nach einem der Ansprüche 1 bis 4, ferner aufweisend Bremsmittel (40 bis 42), die eingerichtet sind um den ersten Rotor (18, 35, 37) zu bremsen.

6. Schwingungserreger nach einem der Ansprüche 1 bis 5, der zwei Paare koaxialer und gegenläufig rotierender Rotoren aufweist, wobei jedes Rotorpaar, das den ersten Rotor und den zweiten Rotor aufweist, einen gleitenden Stator für den ersten Rotor bildet.

7. Schwingungserreger nach Anspruch 6, bei dem die beiden Rotorpaare eine gemeinsame Rotationsachse (17) aufweisen.

8. Schwingungserreger nach Anspruch 6, bei dem jedes Rotorpaar eine unterschiedliche Rotationsachse (17) aufweist.

9. Vorrichtung nach einem der Ansprüche 1 bis 8, wobei die Unwuchten oder Ausgleichsgewichte (37, 38), mit denen die Rotoren versehen sind das gleiche statische Moment der Größenordnung 1 bezüglich der gemeinsamen Drehachse haben und in einer gemeinsamen Ebene (39) oder in der Nähe einer gemeinsamen Ebene (39) angeordnet sind, die orthogonal zu einer oder zwei Achse(n) (17) der Rotoren verläuft.

10. Schwingungserreger nach einem der Ansprüche 1 bis 9, bei dem die Bremsmittel mit mechanischer Reibung arbeiten.

11. Vorrichtung nach einem der Ansprüche 1 bis 10, bei dem die Bremsmittel mit einem elektromagnetischen Effekt arbeiten, insbesondere mit Foucault-Strömen.

12. Schwingungserreger nach einem der Ansprüche 1 bis 11, bei dem der zweite Rotor eine Aushöhlung (22) und einen elektromagnetischen Kreis zur Erzeugung eines Magnetfelds in dieser Aushöhlung aufweist und bei dem der erste Rotor einen Bereich (23) aufweist, der mit geringem Spiel in die Aushöhlung (22) des zweiten Rotors eingelassen ist.
